Europäisches Patentamt

European Patent Office

Office européen des brevets

(11) Publication number: **0 197 654**

A2

# (12) EUROPEAN PATENT APPLICATION

(21) Application number: 86301627.5

(22) Date of filing: 07.03.86

(51) Int. Cl.⁴: **F 02 F 5/00**
**F 16 J 9/02, F 16 J 9/28**

(30) Priority: 01.04.85 US 718454

(43) Date of publication of application:
15.10.86 Bulletin 86/42

(84) Designated Contracting States:
DE GB

(71) Applicant: GENERAL MOTORS CORPORATION
General Motors Building 3044 West Grand Boulevard
Detroit Michigan 48202(US)

(72) Inventor: Russell, Robert Alan
1604 Long Shore Drive
Ann Arbor Michigan 48105(US)

(74) Representative: Haines, Arthur Donald et al,
GM Patent Section Luton Office (F6) P.O. Box No. 3
Kimpton Road
Luton, Beds. LU2 OSY(GB)

(54) Engine piston assembly with ceramic top ring.

(57) A one-piece single-gap ceramic piston ring (30) is mounted in a top groove (24) below a reduced-diameter head land of a piston (16) to form an assembly. Preferable use of an L-shaped ring cross-section and high strength ceramic material provide a ring (30) capable of being installed over the head land while maintaining opening and closing strains within the ultimate strain capability of the ceramic material of the ring (30).

Fig. 1

## ENGINE PISTON ASSEMBLY WITH CERAMIC TOP RING

Technical Field

This invention relates to piston and ring assemblies for internal combustion engines and more particularly to piston rings for use in the top compression ring positions of engine pistons.

Background

The potential benefits of using ceramics for an engine piston ring are significant. With the currently increasing emphasis on reduced heat rejection, low friction and low wear in high performance engines, including diesel engines, the capabilities of metallic materials for piston rings are less than ideal. Metallic alloys which might withstand very high temperatures of advanced low heat rejection or "adiabatic" engines are extremely expensive and often include rare or difficult to obtain elements.

The use of ceramics for other in-cylinder components in this environment is becoming more common as research on ceramics yields positive results. Piston rings made of ceramic materials having high compressive strength and superior high temperature properties together with low heat transfer and lubrication requirements should provide excellent engine operating characteristics. Ceramic piston rings may also facilitate the use of ceramic piston domes by minimizing the effects of extreme thermal gradients caused by heat transfer through the piston rings to a cooler cylinder liner.

However, the brittle nature and limited elastic qualities of structural ceramics have resulted in a fundamental limitation to the use of ceramics as piston ring materials; namely, stress encountered at the time of assembly. Thus, the use of these materials for piston rings has been limited to multiple-piece ring segments or assembled-in-place components of multiple piece pistons. Neither of these is considered a durable, cost-effective approach for high performance engine usage.

By using rings of small radial wall thickness, it would be possible to make an installable ring of conventional rectangular cross-sectional shape having a single gap. Such a design, however, would yield an assembly greatly compromised with respect to ring support from the ring groove and the probability of successful operation would be diminished. In addition, such a ring would have too little tension to form a good gas seal and thus would be further compromised with respect to its intended function.

Summary of the Invention

The present invention proposes a solution to the foregoing problems, preferably through the use of a top compression ring having a known Dykes type ring geometry of L-shaped cross-section, as illustrated in US-A-2566603. As a novel feature, the ring is formed of structural ceramic material and installed at the very top of the piston to yield an assembleable piston and ceramic ring combination. Location at the piston top end reduces the amount of expansion of the ring required to fit it over the piston head land, which is of substantially less diameter than the supporting land below the top ring. Thus the installation stresses for the ceramic ring are reduced to levels which permit the use of the ceramic material in a piston ring of known configuration.

The use of the L-shaped ring geometry with metallic rings has previously been proposed to reduce friction while maintaining good gas sealing. These factors are also helpful in the present combination and combine with the reduced diameter head land to lower the installation stresses and make the use of a single piece ceramic ring feasible for the top ring position of an internal combustion engine.

These and other features and advantages of the invention will be more fully understood from the following description of a preferred embodiment taken together with the accompanying drawings.

Brief Drawing Description

In the drawings:

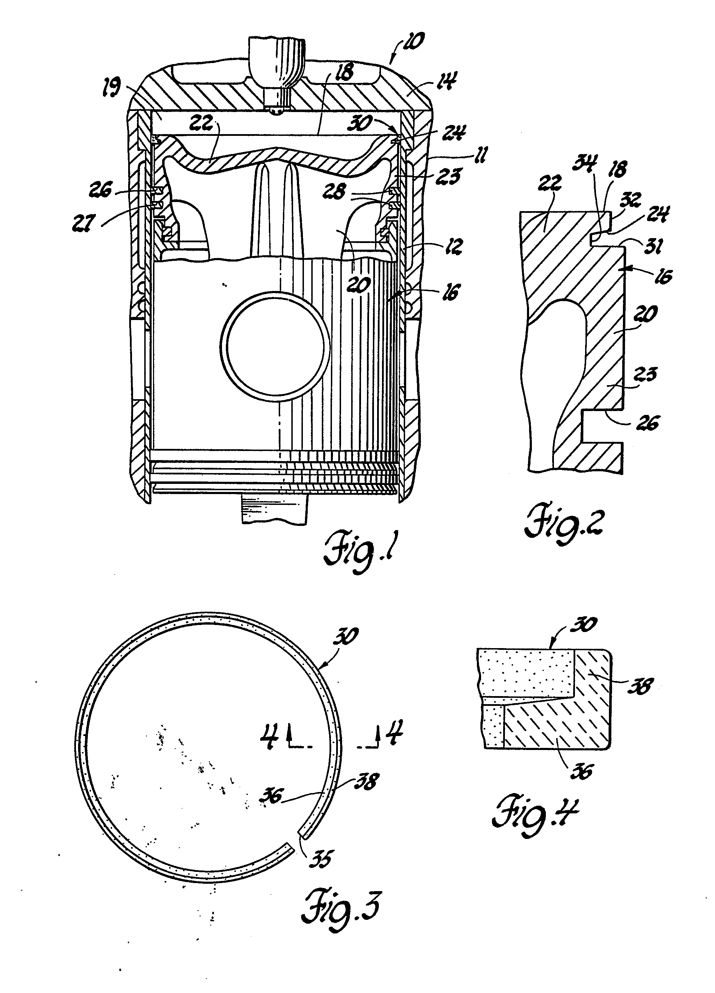

Figure 1 is a cross-sectional view of a portion of an engine showing one of the cylinders having installed therein a piston and ring assembly in accordance with the invention;

Figure 2 is an enlarged fragmentary cross-sectional view of a portion of the piston of Figure 1;

Figure 3 is a top plan view of a piston ring in accordance with the invention;

Figure 4 is a cross-sectional view of the piston ring from the plane indicated by the line 4-4 of Figure 3, and

Figure 5 is a graphical comparison of opening and closing installation strains for conventional rectangular rings and ceramic head land rings in accordance with the invention.

Detailed Description

In the drawings, numeral 10 generally indicates an internal combustion engine of the two-cycle diesel type, such as the Series 92 diesel engines manufactured by Detroit Diesel Allison Division of General Motors Corporation. Engine 10 includes a cylinder block 11 supporting a plurality of cylinder-defining liners 12, only one of which is shown. A cylinder head 14, mounted on the block, extends across and closes one end of the cylinder. A piston 16, reciprocable within the cylinder liner, has a recessed head end 18 which co-operates with the liner and cylinder head to define an enclosed, variable volume combustion chamber 19 at the cylinder closed end.

In its general combustion features, the piston is of the crosshead type constructed generally in the manner of the piston disclosed in US-A-3,555,972 (Hulsing), assigned to the assignee of the present invention and the disclosure of which is hereby incorporated herein by reference. In pertinent part, the piston includes a head member 20 having an end wall 22 connecting at its outer periphery with a side wall formed by a depending annular ring belt portion 23. The ring belt portion contains three compression ring grooves; a top, or fire, ring groove 24 and somewhat lower located second and third compression ring grooves 26, 27 respectively.

In accordance with conventional practice, the second and third compression ring grooves 26, 27 are of generally rectangular cross section. Received therein are conventional metallic one-piece split piston rings 28, which are also of generally rectangular cross section although their outer faces may have other than flat configurations. However, in accordance with the invention, the top, or fire, ring groove 24 is located at or close to the piston head end 18, adjacent the end wall 22, and receives a ceramic head land compression ring 30 of generally L-shaped configuration.

In particular, the top ring groove 24 extends axially between a lower support land 31 and an upper head land 32. The support land 31 extends radially from the outer diameter of the piston ring belt portion 23 to the inner diameter, or base, 34 of the ring groove 24. The head land 32 extends axially between the ring groove 24 and the head end 18 of the piston and has a diameter substantially less than that of the outside diameter of the support land 31 below. The upper wall of the ring groove 24, forming the bottom of the head land, is shown as conically upwardly tapered, although a radial wall configuration may be used if desired.

The ceramic head land piston ring 30, best seen in Figures 3 and 4, is of generally annular shape, having a single gap 35 to permit installation of the ring on the piston. The ring 30 also has an L-shaped cross-sectional configuration including a radially-extending flange portion or flange 36 connecting at its outer end with an upwardly-extending annular wall portion 38. The radial flange portion 36 is received within the top ring groove 24 with suitable clearance to allow for some movement of the ring therein. The annular wall portion 38 extends into engagement with the cylinder wall and upwardly alongside and outwardly of the head land 32, preferably extending to a position approximately aligned with the piston head end 18. However, the ring annular wall portion 38 may be

0197654

shorter or longer than the associated edge of the head land without departing from the scope of the invention.

In accordance with the invention, the piston ring 30 is formed of a suitable ceramic material and is designed together with top ring groove 24 to provide (1) effective sealing operation of the ring when installed and (2) installation of the ring without exceeding the strain limitations of the ceramic material. To accomplish the desired purposes, the ceramic material must be selected to provide suitable wear and temperature-resisting characteristics as well as a relatively high strain-to-failure limit. Such materials may be found among materials often called "high strength ceramics" or "engineering ceramics". Among materials of this sort currently involved in application in heat engines are partially stabilized zirconia, silicon nitride, silicon carbide and dispersion-toughened alumina. These and other materials which provide the necessary strength and wear characteristics for a ring of the type described are potential candidates for use in rings in accordance with the invention.

The ring design parameters that govern installation stresses of a piston ring are its installed diameter, radial thickness, free end gap and the diameter of the top of the piston over which the ring must be installed. The ring free end gap is defined as the difference between the end gap dimension of the ring in its free state and the gap dimension when closed to cylinder diameter.

For the general case of a rectangular ring which must be installed over a piston crown with a diameter close to that of the cylinder bore, the diameter of the piston top is often assumed to be the same as that of the cylinder bore. Formulas for calculating installation stresses of rings in accordance with the foregoing assumption may be found on page 16 of the Engineer's Handbook, Ninth Edition, published by the Koppers Company Inc., Metal Products Division, Baltimore, Maryland.

The significance of the design features of the head land ring as used in the present invention is that the geometry involved does not require expansion of the ring upon installation to the same extent as does the geometry of a conventional ring and groove. Thus, the head land ring geometry used at the top of the piston permits the use of low strain-to-failure ring material such as engineering ceramics.

In order to analyze the differences in the two design concepts, it is advantageous to determine the values of strain rather than stress. For this purpose the equations in the Koppers handbook for conventional rings may be modified by eliminating the modulus of elasticity $E_n$ and redesignating the elements of the formula as follows:

$S_c$ = strain with the ring closed to cylinder diameter, mm/mm.

$S_o$ = strain when the ring is opened to installation diameter, mm/mm.

D = cylinder bore diameter, millimetres.

Dp = head land diameter, millimetres.

Di = inside diameter of the free ring, millimetres.

g = the free ring gap (difference between gap dimension with the ring open and unstressed and when closed to cylinder bore diameter), millimetres.

d = ring radial wall thickness, millimetres.

With these definitions, the closing strain on either the standard or head land type ring is given by formula [1].

$$[1] \qquad S_c = \frac{.482g/d}{[(D/d)-1]^2}$$

The opening strain on a conventional rectangular ring open to cylinder diameter is given by formula [2].

$$[2] \qquad S_o = \frac{.424(8d-g)(1/d)}{[(D/d-1]^2}$$

This formula for $S_o$ assumes that the opening circumferential change of the ring is 8d which does not apply to the head land ring as installed in accordance with the invention. In the case of the head land ring, the change in opening diameter need only be sufficient to allow the ring to pass over the head land with its reducéd diameter Dp. This requires a lesser circumferential change in ring size which is equal to pi times the change in ring inside diameter from its free state to the diameter Dp of the head land at the top of the piston. Thus, the opening strain $S_{oh}$ for a

head land type ring in accordance with the invention is
given by formula [3].

$$[3] \quad S_{oh} = \frac{.424[(Dp-Di)(pi)-g](1/d)}{[(D/d)-1]^2}$$

The equations shown for $S_c$ and $S_o$ and $S_{oh}$ all
include the ratio of the ring free end gap g to the
ring radial wall thickness d. This "end gap ratio" is
fundamental to the installability of the ring.

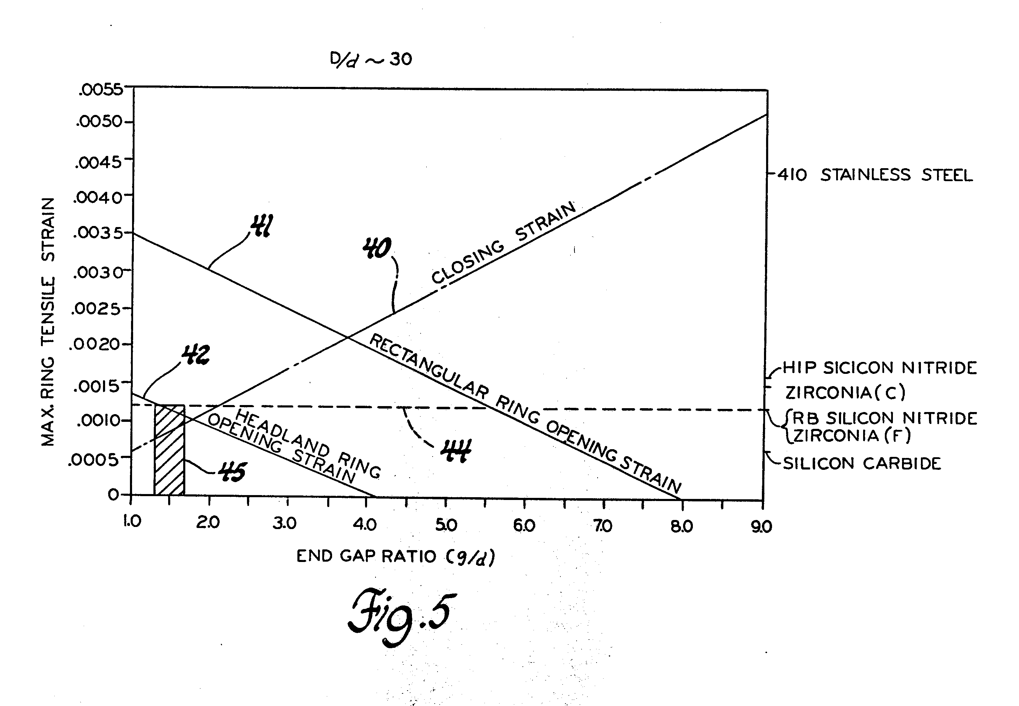

Figure 5 graphically illustrates typical
installation opening and closing maximum strain values
for conventional rectangular rings and head land rings
in accordance with the invention as a function of end
gap ratio. The data are based upon a ratio of cylinder
bore diameter to ring radial wall thickness D/d of
about 30. The closing strain for both rings is shown
by the broken line 40, illustrating that for the same
end gap ratios, both types of rings have the same
maximum strains when closed to cylinder diameter. On
the other hand, the opening strain for the
conventional rectangular ring and installation is shown
by the solid line 41 while the comparative opening
strain for a head land ring installed in accordance
with the invention is shown by the solid line 42.
Representative ultimate tensile strain values for
several high strength ceramic materials and 410
stainless steel are indicated along the right edge of
the diagram. Dashed line 44 indicates the ultimate
strain of a representative commercial zirconia material
and bar 45 indicates preferred ranges of strain and
end gap ratio for a ring of the representative zirconia
material.

The intersections of line 40 with lines 41 and 42 indicate the substantially reduced strain required for installation of a head land ring at the end of a piston as compared to the conventional installation of a rectangular ring. It is also seen that by utilizing a substantially lower end gap ratio, the opening and closing strain values of a head land ring in accordance with the invention can be made considerably lower than the comparative opening and closing strains of a conventional rectangular ring. This allows the use, with a head land ring construction in accordance with the invention, of relatively low ultimate strain, or strain-to-failure, materials as represented by the ceramic materials previously indicated, and permits the use of such materials in a piston top ring application.

As a matter of good practice, for example in an engine of 130 mm bore, the amount of overlapping land diameter which retains the piston ring on the piston should be at least 2 mm per side or 4 mm on the diameter. This will approximate about one half of the ring's radial thickness and, therefore, accounts for a radial thickness-to-bore ratio of approximately 3.0 percent. By some tightening of parameters, this might possibly be utilized with a ratio as low as 2.5 percent of the bore. Combining these requirements with the characteristics indicated in the graph of Figure 5, it is concluded that when the bore/thickness ratio D/d is less than about 40, the most favorable characteristics for ceramic head land top piston rings in accordance with the invention approximate the following parameters:

(a)  end gap ratio between 1.0 and 2.0.

0197654

    (b)   ring radial wall thickness greater than 2.5 percent of cylinder bore.

    (c)   head land diameter of piston between 90 and 95 percent of cylinder bore.

    (d)   ceramic material with ultimate strain of at least .0005.

With the foregoing parameters, a ring installation using high strength ceramic materials as previously indicated is made practical and is capable of providing the indicated advantages in accordance with the invention.

Illustration of the invention by reference to a specific embodiment is intended to be exemplary only and not limiting of the scope of the inventive concepts described. Accordingly the invention is intended to have the full scope permitted by the language of the following claims.

Claims

1. A piston ring (30) for an internal combustion engine (10) having a cylinder (12) and a piston (16) reciprocable in the cylinder, said piston (16) having a head end (18) partially defining a variable volume working chamber (19) at one end of the cylinder (12), a side wall (23) extending from the head end (18) in closely opposed relation to the cylinder (12) and a top ring groove (24) in the side wall close to the head end (18), and said ring groove (24) being defined by a short head land (32) extending to the piston head end (18) and a support land (31) defining a side away from the head end (18), the head land (32) having a lesser outer diameter than the support land (31), characterised in that said piston ring (30) is installable in said ring groove (24) on the piston (16) and is formed of a structural ceramic material, said ring (30) having only a single gap (35) in the circumference for purposes of installation and conformation and having a radial thickness adequate when installed to retain the ring (30) in the ring groove (24) and to provide adequate support against maximum gas force generated within said chamber (19) during operation of said engine (10), said ring (30) having in the free state an outer diametral measure greater than the cylinder diameter (D) and an inner diametral measure (Di) less than the head land diameter (Dp), the differences in said comparative measures being sufficiently small to permit expansion of the ring (30) to a size allowing installation on the piston (16) over the head land (32) and to permit compression of the ring (30) to a size to fit into the cylinder (12) without in either case overstressing the ceramic material of the ring (30).

2. A piston ring (30) according to claim 1, characterised in that said piston ring (30) has an L-shaped cross-sectional configuration.

3. A piston ring (30) according to claim 1 or 2, characterised in that said piston ring ceramic material has an ultimate tensile strain capability of at least .0005.

4. A piston ring (30) according to claim 1 or 2, characterised in that said piston ring (30) has an end gap ratio between 1.0 and 2.0, and a radial wall thickness greater than 2.5 percent of the cylinder diameter (D), said ceramic material has an ultimate tensile strain capability of at least .0005, and said piston head land outer diameter (Dp) is between 90 and 95 percent of the cylinder diameter (D).

0197654

Fig.1

Fig.2

Fig.3

Fig.4

Fig.5